(19) Europäisches Patentamt
European Patent Office
Office européen des brevets

(11) EP 1 748 262 A2

(12) EUROPÄISCHE PATENTANMELDUNG

(43) Veröffentlichungstag:
31.01.2007 Patentblatt 2007/05

(51) Int Cl.:
*F24F 5/00* (2006.01)

(21) Anmeldenummer: 06013698.3

(22) Anmeldetag: 01.07.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 29.07.2005 DE 102005038512

(71) Anmelder: MAICO ELEKTROAPPARATE-FABRIK
GmbH
D-78056 Villingen-Schwenningen (DE)

(72) Erfinder: Radegast, Matthias
78078 Niedereschach-Fischbach (DE)

(74) Vertreter: Grosse, Rainer et al
Gleiss Grosse Schrell & Partner
Patentanwälte Rechtsanwälte
Leitzstrasse 45
70469 Stuttgart (DE)

(54) **Verfahren und Vorrichtung zur Betriebsführung einer temperierten Raumlüftung**

(57) Die Erfindung betrifft ein Verfahren und eine Vorrichtung zur Betriebsführung einer temperierten Raumlüftung, insbesondere Wohnungs-, Büro- oder Gebäudelüftung, bei dem in einem geschlossenen Strömungskreislauf ein Trägermedium gefördert und mittels Erdwärme temperiert wird, geförderte Außenluft mit dem Trägermedium in Wärmeaustausch gelangt und als Zuluft in mindestens einen Raum eingebracht wird. Es ist vorgesehen, dass innerhalb mindestens eines vorbestimmten Zeitraums—unabhängig oder abweichend von wählbaren Einstellungen eines Betreibers der Raumlüftung— die durch das Trägermedium in das Erdreich eingebrachte Wärmeenergie ebenso groß oder etwa ebenso groß ist wie die dem Erdreich durch das Trägermedium entnommene Erdwärmeenergie.

Fig.

EP 1 748 262 A2

**Beschreibung**

Die Erfindung betrifft ein Verfahren zur Betriebsführung einer temperierten Raumlüftung, insbesondere Wohnungs-, Büro- oder Gebäudelüftung, bei dem in einem geschlossenen Strömungskreislauf ein Trägermedium gefördert und mittels Erdwärme temperiert wird, geförderte Außenluft mit dem Trägermedium in Wärmeaustausch gelangt und als Zuluft in mindestens einen Raum eingebracht wird.

Bei derartigen bekannten Verfahren wird die Erdwärme als Wärmeenergiequelle genutzt. Das Trägermedium dient dazu, Erdwärme zum Wärmetausch für die Erwärmung der Außenluft bereitzustellen, die dann als erwärmte Zuluft in den Raum eingebracht wird. Soll der Raum bei hohen Außentemperaturen gekühlt werden, so lässt sich das durch die Erdtemperatur kühlere Trägermedium im Zuge eines Wärmeaustauschs nutzen, um Außenluft abzukühlen und als gekühlte Zuluft in den Raum einzublasen.

Bei den bekannten Verfahren ist nicht immer sichergestellt, dass über längere Zeiträume eine einwandfreie Funktion der temperierten Raumlüftung erhalten bleibt.

Der Erfindung liegt daher die Aufgabe zugrunde, ein Verfahren zur Betriebsführung einer temperierten Raumlüftung anzugeben, das sicher und zuverlässig über eine lange Lebensdauer arbeitet.

Diese Aufgabe wird dadurch gelöst, dass innerhalb mindestens eines vorbestimmten Zeitraums -unabhängig oder abweichend von wählbaren Einstellungen eines Betreibers der Raumlüftung- die durch das Trägermedium in das Erdreich eingebrachte Wärmeenergie ebenso groß oder etwa ebenso groß ist wie die dem Erdreich durch das Trägermedium entnommene Erdwärmeenergie. Der erfindungsgemäßen Verfahrensführung liegt demgemäß eine ausgeglichene Energiebilanz zugrunde, das heißt, die dem Erdboden innerhalb eines vorbestimmten Zeitraums entnommene Erdwärmemenge wird innerhalb des genannten Zeitraums durch die Verfahrensführung als ebenso große oder etwa ebenso große Wärmemenge wieder in das Erdreich zurückgeführt. Eine "Erschöpfung" im Bereich des Erdkollektors/ Erdkollektorfeldes tritt demgemäß nicht ein, weil das Erdreich über den vorbestimmten Zeitraum nicht "überkühlt" beziehungsweise "überwärmt" wird, wodurch die Funktionsfähigkeit erhalten bleibt. Es wird hierbei davon ausgegangen, dass in der Zone des Erdreichs, in der die Erdwärmeenergie entnommen wird, auch die Einspeisung der Wärmeenergie erfolgt, sodass es zu einem Ausgleich kommt. Wenn im Zuge dieser Anmeldung von "Erdreich" gesprochen wird, das wärmetechnisch genutzt wird, so ist hierunter selbstverständlich auch Gestein, Grundwasser usw. zu verstehen. Um die Erdwärmeenergie aufzunehmen beziehungsweise die Wärmeenergie zurückzuspeisen ist es erforderlich, den bereits erwähnten Erdkollektor zu realisieren. Es handelt sich dabei zum Beispiel um ein Röhrensystem oder dergleichen, das im Erdreich verlegt ist und einen guten Wärmeübergang zwischen dem Trägermedium, das in dem Röhrensystem umgepumpt wird, und dem Erdboden herstellt. Da es sich um einen geschlossenen Kreislauf des Trägermediums handelt, ist das Trägermedium gegenüber der Außenwelt abgeschlossen, sodass es nicht zum Eintrag von Bakterien, Pilzen, Schimmel und dergleichen kommen kann. Zwar ist es bekannt, einem Erdkollektor sowohl Wärme zu entnehmen als auch wieder Wärme zuzuführen, jedoch erfolgt dies nicht nach einem konkreten, eine Erschöpfung des Erdkollektors verhindernden Zweck. Hier sorgt das erfindungsgemäße Vorgehen dafür, dass eine ausgeglichene Energiebilanz innerhalb eines vorbestimmten Zeitraums eingehalten wird. Die Einhaltung ist garantiert, weil -unabhängig oder abweichend von wählbaren Einstellungen eines Betreibers der Raumlüftung- der Ausgleich der Energiebilanz hergestellt oder angestrebt wird. Sieht der Betreiber durch wählbare Parameter der Raumlüftung beispielsweise eine bestimmte Raumtemperatur vor, so kann es erfindungsgemäß dazu kommen, dass seine Einstellung nicht oder nur zum Teil berücksichtigt wird, weil der herbeizuführende Energiebilanzausgleich selbständig vorrangig ist und daher seine Einstellung ignoriert oder nur teilweise beachtet wird.

Die Erfindung betrifft ferner ein Verfahren zur Betriebsführung einer temperierten Raumlüftung, insbesondere Wohnungs-, Büro, oder Gebäudelüftung, bei dem in einem geschlossenen Strömungskreislauf ein Trägermedium gefördert und mittels Erdwärme temperiert wird, geförderte Außenluft mit dem Trägermedium in Wärmeaustausch gelangt und als Zuluft in mindestens einen Raum eingebracht wird, wobei bei nicht ausgeglichener Energiebilanz innerhalb mindestens eines vorbestimmten Zeitbereichs eine vorgegebene und/oder vom Betreiber der Raumlüftung wählbare Einstellung automatisch derart verändert wird, dass eine der Veränderung entsprechende Wärmeenergie in das Erdreich vom Trägermedium eingebracht oder zusätzlich eingebracht wird beziehungsweise eine der Veränderung entsprechende Wärmeenergie aus dem Erdreich vom Trägermedium entnommen oder zusätzlich entnommen wird. Die nicht ausgeglichene Energiebilanz kann zum Beispiel dadurch zustande kommen, dass eine größere durch das Trägermedium dem Erdreich entnommene als in das Erdreich durch das Trägermedium eingebrachte Wärmemenge innerhalb eines bestimmten Zeitraums vorliegt. Der genannte Zeitraum liegt somit der Energiebilanz zugrunde. Ein insbesondere davon abweichender Zeitbereich bestimmt die Zeitspanne, innerhalb der eine nicht ausgeglichene Energiebilanz in eine ausgeglichene Energiebilanz überführt oder ein Energieausgleich angestrebt wird. Um das Ziel der ausgeglichenen Energiebilanz zu erreichen werden bestimmte Einstellungen, die im Normalbetrieb vorgegeben sind und/oder vom Betreiber der Raumlüftung gewählt werden, beispielsweise sein Wunsch, eine bestimmte Temperatur im Raum nicht zu überschreiten, erfindungsgemäß automatisch abgeändert werden, sodass seine Vorgabe nicht oder nur zum Teil eingehalten wird. Diese Nichteinhaltung dient dazu, den gewünschten Ausgleich der Energiebilanz herzustellen oder anzustreben.

Demgemäß handelt es sich bei der Erfindung um eine gezielte Energieentnahme aus dem Erdboden, gepaart mit einem gezielten Energieeintrag in den Erdboden, wobei dies in einem vorgegebenen Zeitabschnitt erfolgt und Grundeinstellungen der Raumlüftung, die im Normalbetrieb vorgegeben sind und/oder durch einen Benutzer der Raumlüftung eingestellt werden, beispielsweise mittels einer Bedienkonsole, zum Herbeiführen eines Energiebilanzausgleiches "überstimmt" werden, das heißt, die Anlage arbeitet automatisch mit dem Ziel, die Energiebilanz auszugleichen.

Nach einer Weiterbildung der Erfindung ist vorgesehen, dass der vorbestimmte Zeitraum ein Jahr beträgt. Hierdurch werden die zyklischen Temperaturveränderungen der Außenluft jahreszeitenabhängig berücksichtigt.

Nach einer Weiterbildung der Erfindung ist vorgesehen, dass der Zeitbereich im Sommer, insbesondere im August, liegt. Hierbei ist berücksichtigt, dass die Entnahme von Erdwärmeenergie zu Heizungszwecken des Raumes im Winterhalbjahr stattfindet und demgemäß eine entsprechend große Wärmemenge dem Erdreich im Winterhalbjahr entnommen wird. Um nun eine ausgeglichene Energiebilanz herbeizuführen, ist es erforderlich, eine entsprechend große Wärmemenge in das Erreich zurückzuleiten, was insbesondere im Sommer gelingt, da dann hohe Außenlufttemperaturen zur Verfügung stehen, sodass durch Wärmeaustausch mit dem Trägermedium Wärmeenergie in den Erdkollektor zurückgespeist werden kann. Ein vorbestimmter Zeitbereich, beispielsweise der Monat August, dient demgemäß dazu, die Energiebilanz auszugleichen oder im Wesentlichen auszugleichen. In diesem Zeitbereich werden demgemäß vorgegebene und/oder vom Betreiber der Raumlüftung gewählte Einstellungen automatisch derart abgeändert, um einen Energieausgleich herbeizuführen oder anzustreben.

Nach einer Weiterbildung der Erfindung ist vorgesehen, dass im Winterhalbjahr dem Erdreich Erdwärmeenergie entnommen wird. Ferner ist es vorteilhaft, wenn im Sommerhalbjahr dem Erdreich Wärmeenergie zugeführt wird.

Wie bereits erläutert, ist es vorteilhaft, wenn die in das Erdreich eingebrachte Wärmeenergie von der Außenluft stammt.

Nach einer Weiterbildung der Erfindung ist vorgesehen, dass als Trägermedium eine Flüssigkeit verwendet wird. Der geschlossene Strömungskreislauf erfolgt demgemäß mit einer Flüssigkeit, wobei diese insbesondere als Sole ausgebildet ist.

Für die Betriebsführung der Raumlüftung ist es vorteilhaft, wenn die Förderung von Außenluft ein- und ausgeschaltet wird. Demgemäß wird eine Luftfördereinrichtung, beispielsweise mindestens ein Ventilator, dementsprechend ein- und ausgeschaltet. Im Zuge dieser Anmeldung wird insbesondere davon ausgegangen, dass kein Ein- und Ausschalten der Lüftfördereinrichtung erfolgt, sodass die Aussenluftförderung ständig erfolgt.

Nach einer Weiterbildung der Erfindung ist vorgesehen, dass die Förderung des Trägermediums ein- und ausgeschaltet wird. Durch das Einschalten wird der Strömungskreislauf in Bewegung gesetzt, sodass es -je nach Situation- zu einem Wärmeeintrag in das Erdreich oder zu einer Wärmeentnahme aus dem Erdreich kommt. Wird das Trägermedium ausgeschaltet, was beispielsweise dadurch erfolgen kann, dass eine die Flüssigkeit umpumpende Pumpe abgeschaltet wird, so hört der Wärmeeintrag in das Erdreich beziehungsweise die Wärmeentnahme aus dem Erdreich auf.

Ferner ist es vorteilhaft, wenn die nach dem Wärmetausch vorliegende Temperatur der Außenluft ermittelt und beim Unterschreiten einer vorgegebenen ersten Minimaltemperatur die Förderung des Trägermediums eingeschaltet wird. Hat die Außenluft daher eine relativ niedrige Temperatur, sodass das Einbringen der nicht temperierten Außenluft in den Raum als zu kühl empfunden wird, so lässt sich eine Außenluftvorwärmung dadurch erzielen, dass die Förderung des Trägermediums aufgenommen wird und dadurch entsprechend der Erdreichtemperatur temperiertes Trägermedium einem Wärmetauscher zugeführt wird, der die Außenluft erwärmt, sodass diese als erwärmte Zuluft in den Raum eintreten kann. Die Inbetriebnahme des Strömungskreislaufes des Trägermediums erfolgt vorzugsweise durch Temperatursensierung der Außenluft.

Wird -nach einer Weiterbildung der Erfindung- festgestellt, dass die nach dem Wärmetausch vorliegende Temperatur der Außenluft eine vorgegebene erste Maximaltemperatur überschreitet, so wird die Förderung des Trägermediums ausgeschaltet. Liegt demzufolge beispielsweise nach einer relativ kühlen Wetterperiode, die ein Erwärmen der Außenluft erforderte, ein wärmerer Wetterabschnitt vor, sodass die Temperatur der Außenluft ansteigt, so wird nach Überschreiten einer vorgegebenen ersten Maximaltemperatur, die nach dem Wärmetausch bei der Außenluft vorliegt, die Förderung des Trägermediums ausgeschaltet, um zu verhindern, dass hinreichend warme Außenluft nicht zusätzlich mittels Erdwärme temperiert wird.

Die erste Minimaltemperatur liegt im Bereich von + 5°C bis - 5°C, vorzugsweise bei 0°C. Die erste Maximaltemperatur liegt vorzugsweise 0,01 bis 8°C über der ersten Minimaltemperatur. Vorzugsweise liegt sie 2°C über der ersten Minimaltemperatur. Alternativ ist es auch möglich, dass die erste Maximaltemperatur 2°C beträgt. Letzteres wird insbesondere dann gewählt, wenn die erste Minimaltemperatur 0°C beträgt.

Die vorstehenden Ausführungen betreffen den Winterbetrieb der temperierten Raumlüftung. Nachstehend wird nunmehr auf den Sommerbetrieb der temperierten Raumlüftung eingegangen.

Nach einer Weiterbildung der Erfindung ist vorgesehen, dass die vor dem Wärmetausch vorliegende Temperatur der Außenluft ermittelt und beim Überschreiten einer vorgegebenen zweiten Maximaltemperatur die Förderung des Trägermediums eingeschaltet wird. Weist demgemäß die für die Raumlüftung zu verwendende Außenluft eine Temperatur auf, die die vorgegebene zweite Maximaltemperatur überschreitet, so wird durch die Förderung des Trägermediums Wärmeenergie in den Wärmekollektor eingetragen, das heißt, der Erdboden wird mittels des Trägermediums erwärmt, insbesondere mit dem Ziel, um die vorstehend erwähnte ausgeglichene Energiebilanz anzustreben.

Nach einer Weiterbildung der Erfindung ist vorgesehen, dass die vor dem Wärmetausch vorliegende Temperatur der Außenluft ermittelt und beim Unterschreiten einer vorgegebenen zweiten Minimaltemperatur die Förderung des Trägermediums ausgeschaltet wird. Stellt sich demgemäß heraus, dass die Temperatur der Außenluft vor dem Wärmetausch die zweite Minimaltemperatur unterschreitet und demzufolge keine Wärmeenergie in das Erdreich eingetragen werden sollte, weil dies natürlich auch zu einer gegebenenfalls zu kühlen Zuluft für den Raum führt, so wird die Förderung des Trägermediums ausgeschaltet, um den entsprechenden Wärmeenergietransport abzubrechen.

Die zweite Maximaltemperatur ist vorzugsweise größer 15°C, insbesondere 22°C.

Nach einer Weiterbildung der Erfindung ist vorgesehen, dass die zweite Minimaltemperatur 0,01 bis 8°C, vorzugsweise 0,5°C, kleiner als die zweite Maximaltemperatur ist.

Die Erfindung betrifft ferner eine Vorrichtung zur Betriebsführung einer temperierten Raumbelüftung, insbesondere Wohnungs-, Büro- oder Gebäudebelüftung, mit einem geschlossenen Strömungskreislauf eines Trägermediums, das mit einem Erdkollektor und einem Trägermedium-Außenluft-Wärmetauscher zusammenwirkt, wobei geförderte Außenluft in dem Trägermedium-Außenluft-Wärmetauscher temperiert und als Zuluft in mindestens einen Raum eingebracht wird, wobei eine Steuer- und/oder Regeleinrichtung derart arbeitet, dass innerhalb mindestens eines vorbestimmten Zeitraums -unabhängig oder abweichend von wählbaren Einstellungen eines Betreibers der Raumlüftung- die durch das Trägermedium in das Erdreich eingebrachte Wärmeenergie ebenso groß oder etwa ebenso groß ist wie die dem Erdreich durch das Trägermedium entnommene Erdwärmeenergie.

Ferner betrifft die Erfindung eine Vorrichtung zur Betriebsführung einer temperierten Raumbelüftung, insbesondere Wohnung-, Büro- oder Gebäudebelüftung, mit einem geschlossenen Strömungskreislauf eines Trägermediums, das mit einem Erdkollektor und einem Trägermedium-Außenluft-Wärmetauscher zusammenwirkt, wobei geförderte Außenluft in dem Trägermedium-Außenluft-Wärmetauscher temperiert und als Zuluft in mindestens einen Raum eingebracht wird, wobei eine Steuer- und/oder Regeleinrichtung derart arbeitet, dass bei nicht ausgeglichener Energiebilanz, insbesondere durch eine größere durch das Trägermedium dem Erdreich entnommene als in das Erdreich durch das Trägermedium eingebrachte Wärmeenergie, innerhalb mindestens eines vorbestimmten Zeitbereichs eine vorgegebene und/oder vom Betreiber der Raumlüftung wählbare Einstellung automatisch derart verändert wird, dass eine der Veränderung entsprechende Wärmeenergie in das Erdreich vom Trägermedium eingebracht oder zusätzlich eingebracht wird beziehungsweise eine der Veränderung entsprechende Wärmeenergie dem Erdreich vom Trägermedium entnommen oder zusätzlich entnommen wird.

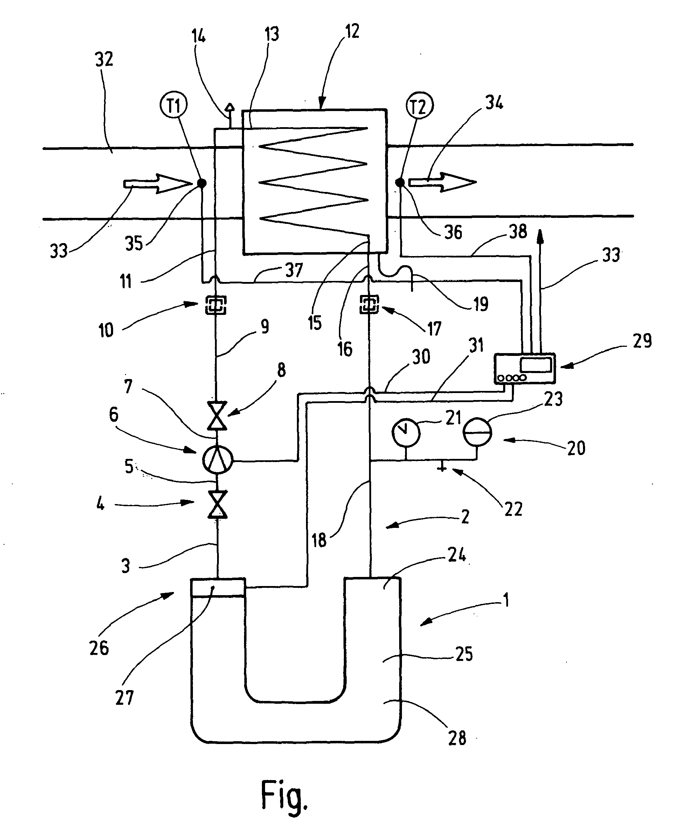

Die Zeichnung veranschaulicht die Erfindung und zwar zeigt die Figur ein Schema des Aufbaus und der Betriebsführung einer temperierten Raumlüftung, insbesondere Wohnungs-, Büro- oder Gebäudelüftung.

Die Figur zeigt eine Prinzipdarstellung einer temperierten Raum-, Wohnungs-, Büro- oder Gebäudelüftung. Es ist ein Erdkollektor 1 vorgesehen, der ein von Rohrleitungen gebildetes Kollektorfeld aufweist und Teil eines Strömungskreislaufes 2 ist, der -am Ausgang des Erdkollektors 1- eine Rohrleitung 3 aufweist, die zu einem Absperrorgan 4 führt. Das Absperrorgan 4 steht über eine Rohrleitung 5 mit einer Umwälzpumpe 6 in Verbindung, die mittels einer Rohrleitung 7 an ein weiteres Absperrorgan 8 angeschlossen ist, das über eine Rohrleitung 9 mit einer Verschraubung 10 in Verbindung steht, die über eine Rohrleitung 11 zu einem Trägermedium-Außenluft-Wärmetauscher 12 führt, wobei der Eingang 13 des Wärmetauschers 12 mit einem verschließbaren Entlüftungsstutzen 14 versehen ist. Der Ausgang 15 des Wärmetauschers 12 steht über eine Rohrleitung 16 mit einer Verschraubung 17 in Verbindung, die über eine Rohrleitung 18 mit dem Eingang des Erdkollektors 1 verbunden ist. Der Trägermedium-Außenluft-Wärmetauscher 12 weist einen Kondensatablauf 19 mit Syphon auf. An die Rohrleitung 18 sind Sicherheitsarmaturen 20 angeschlossen, die ein Sicherheitsmanometer 21, einen Hahn 22 (insbesondere KFE-Hahn) sowie ein Membranausdehnungsgefäß 23 aufweisen. Innerhalb des Strömungskreislaufes 2 wird eine Flüssigkeit 24 bei Betrieb der Umwälzpumpe 6 in Uhrzeigerrichtung umgepumpt, wobei es sich bei der Flüssigkeit 24 insbesondere um eine Sole 25 handelt. Dem Ausgang 26 des Erdkollektors 1 ist eine Zusatzheizung 27 zugeordnet, die insbesondere als elektrische Heizung ausgebildet sein kann und im Betrieb zur Erwärmung der Sole 25 führt. Die Flüssigkeit 24 beziehungsweise die Sole 25 bildet ein Trägermedium 28 des Strömungskreislaufes 2.

Mittels einer Steuer- und/oder Regeleinrichtung 29 kann über Steuerleitungen 30 und 31 die Umwälzpumpe 6 ein- und ausgeschaltet und auch die Zusatzheizung 27 ein- und ausgeschaltet werden. Mittels einer Steuerleitung 33 lässt sich eine nicht näher dargestellte Außenluftfördereinrichtung, beispielsweise ein Ventilator, in Betrieb nehmen beziehungsweise ausschalten. Die Außenluftfördereinrichtung ist stets in Betrieb. Nur in Sonderfällen, wie beispielsweise einer Wartung des Gesamtsystems, erfolgt ein Ausschalten. Die Außenluftfördereinrichtung fördert Außenluft durch einen Förderkanal 32, in dem sich der Trägermedium-Außenluft-Wärmetauscher 12 befindet. Die Außenluftfördereinrichtung saugt Außenluft 33 an und fördert sie durch den Wärmetauscher 12. Die Außenluft 33 verlässt den Wärmetauscher 12 als Zuluft 34 und gelangt in einen Raum, eine Wohnung, ein Büro oder ein Gebäude. Im Trägermedium-Außenluft-Wärmetauscher 12 kommt es zu einem Wärmetausch zwischen der Außenluft 33 und dem Trägermedium 28, vorausgesetzt, dass die Umwälzpumpe 6 in Betrieb ist. Stromaufwärts des Wärmetauschers 12 befindet sich innerhalb des Förderkanals 32 ein Temperatursensor 35, der demgemäß vor der Wärmetauschung die Temperatur T1 der Außenluft 33 erfasst. Stromabwärts des Wärmetauschers 12 befindet sich innerhalb des Förderkanals 32 ein Temperatursensor 36, der -nach dem Wärmetausch- die Temperatur T2 der behandelten Außenluft 33 beziehungsweise die Temperatur der Zuluft 34 ermittelt. Die beiden Temperatursensoren 35 und 36 stehen über Messleitungen 37 und 38 mit der Steuer- und/oder Regeleinrichtung 29 in Verbindung.

Es ergibt sich folgende Funktion: Im sogenannten Winterbetrieb soll durch Vorwärmen der Außenluft 33 ein Heizen des Raumes erfolgen. Hierzu wird geförderte Außenluft 33 im Wärmetauscher 12 von dem Trägermedium 28 nach dem Wärmetauschprinzip erwärmt und gelangt als entsprechend erwärmte Zuluft 34 in den Raum. Hierbei wird mittels des Erdkollektors 1 dem Erdreich, in dem sich der Erdkollektor 1 befindet, Erdwärme entnommen, mittels des als geschlossener Strömungskreislauf 2 ausgebildeten Kreislaufs - angetrieben durch die Umwälzpumpe 6- dem Wärmetauscher 12 zugeführt und nach dem Wärmetausch wieder zum Erdkollektor 1 zurückgepumpt. Im sogenannten Sommerbetrieb soll ein Kühlen des Raumes oder dergleichen durchgeführt werden. Hierbei wird mittels der nicht dargestellten Außenluftfördereinrichtung Außenluft 33 gefördert und im Wärmetauscher 12 abgekühlt, sodass die abgekühlte Außenluft 33 als Zuluft 34 in den Raum oder dergleichen gelangt. Der Kühleffekt wird im Wärmetauscher 12 dadurch bewirkt, dass durch Umpumpen der Sole 25 der relativ warmen Außenluft 33 Wärme durch das Trägermedium 28 entzogen und diese Wärme mittels des Trägermediums 28 dem Erdkollektor 1 zugeführt und von diesem in das Erdreich eingebracht wird.

Die Anordnung ist nun derart getroffen, dass bei einer vom Temperatursensor 35 ermittelten Außenlufttemperatur T1 < = 0°C eine von der Steuer- und/oder Regeleinrichtung 29 bewirkte Freigabe der Umwälzpumpe 6 erfolgt. Weist die Außenluft stromabwärts des Wärmetauschers 12 eine Temperatur T2 von 0°C auf, ermittelt der Temperatursensor 36 demgemäß eine erste Minimaltemperatur, nämlich eine Temperatur T2 = 0°C, so schaltet die Steuer- und/oder Regeleinrichtung 29 die Umwälzpumpe 6 ein. Es erfolgt demgemäß ein entsprechender Betrieb der temperierten Lüftung. Steigt die Temperatur der Außenluft stromabwärts des Wärmetauschers 12 auf 2°C, ermittelt demgemäß der Temperatursensor 36 eine erste Maximaltemperatur, nämlich eine Temperatur T2 = 2°C, so wird mittels der Steuer- und/oder Regeleinrichtung 29 die Umwälzpumpe 6 wieder außer Betrieb genommen. Die genannten Funktionen der Inbetriebnahme der Umwälzpumpe 6 und der Außerbetriebnahme der Umwälzpumpe 6 sind fest von der Steuer- und/oder Regeleinrichtung 29 vorgegeben, insbesondere fest programmiert und können nicht geändert werden.

Im sogenannten Sommerbetrieb ist eine Kühlung des Raumes oder dergleichen vorgesehen. Der Betreiber der Raumlüftung hat die Möglichkeit, Einstellungen vorzunehmen. Er kann für die Außenluft 33 stromaufwärts des Wärmetauschers 12 einen Temperaturbereich von T1 = 22° bis insbesondere T1 = 26°C einstellen, wobei in diesem Temperaturbereich und auch oberhalb von 26°C tatsächlicher Außenlufttemperatur von der Steuer- und/oder Regeleinrichtung 29 eine Freigabe der Umwälzpumpe 6 erfolgt. Sofern der Temperatursensor 35 eine Temperatur T1 größer als der eingestellte Wert oder größer 26°C ermittelt wird, wenn also eine zweite Maximaltemperatur vorliegt, so wird die Umwälzpumpe 6 von der Steuer- und/oder Regeleinrichtung 29 eingeschaltet und die Sole 25 umgepumpt mit der Folge, dass ein entsprechender Wärmeenergieeintrag in das Erdreich im Bereich des Erdkollektors 1 erfolgt. Sinkt die Temperatur der Außenluft, beträgt also die Temperatur T1 am Temperatursensor 35 einen kleineren Wert als vorher, liegt also eine zweite Minimaltemperatur vor, so nimmt die Steuer- und/oder Regeleinrichtung 29 die Umwälzpumpe 6 wieder außer Betrieb.

Am nicht näher dargestellten, vorzugsweise im temperierten Raum vorhandenen Bedienteil der Raumlüftung lässt sich als Option ein Zusatzheizungs-Betrieb wählen. Die Umwälzpumpe 6 wird mittels der Steuer- und/oder Regeleinrichtung 29 in Betrieb genommen und sollte sich trotz des Betriebes herausstellen, dass die stromabwärts des Wärmetauschers 12 vorliegende Temperatur der Außenluft 33 (also die Temperatur der Zuluft 34) < = 0°C ist, der Temperatursensor 36 somit die Temperatur T2 < = 0°C ermittelt, so wird die Zusatzheizung 37 von der Steuer- und/oder Regeleinrichtung 29 in Betrieb genommen, sodass die geförderte Sole erwärmt wird und im erwärmten Zustand zum Wärmetauscher 12 gelangt. Die Zusatzheizung 37 wird wieder ausgeschaltet, wenn am Temperatursensor 35 die Temperatur T1 der Außenluft 33 > 0°C ermittelt wird. Die vorstehend erwähnten Funktionen der Zusatzheizung sind fest vorgegeben, insbesondere fest programmiert, und können nicht geändert werden.

Von besonderer Bedeutung ist, dass die temperierte Raum-, Wohnungs-, Büro- oder Gebäudelüftung derart arbeitet, dass eine ausgeglichene Energiebilanz vorliegt. Insbesondere gilt, dass

$$Q_{Winter} = Q_{Sommer}$$

ist, vorzugsweise soll die aus dem Erdreich entnommene Wärmeenergie innerhalb einer vorgegebenen Zeitspanne ebenso groß wie die in das Erdreich eingebrachte Wärmeenergie sein, wobei vorzugsweise $Q_{Winter}$ die entnommene Wärmeenergie und $Q_{Sommer}$ die eingebrachte Wärmeenergie kennzeichnet.

Es gilt:

$$Q_{Winter} = m \cdot c \cdot \Delta T \cdot t \quad [kWh]$$

und

$$Q_{Sommer} = m \cdot c \cdot \Delta T \cdot t \quad [kWh],$$

wobei $Q_{Winter}$ die den Winterbetrieb betreffende Wärmemenge, $Q_{Sommer}$ die den Sommerbetrieb betreffende Wärmemenge, m der Massenstrom der Luft, der insbesondere vom Inbetriebnahmemonteur bei der Installation der Lüftung fest vorgebbar eingestellt wird, c eine spezifische Wärmekapazität der Luft, die den Wert 1 aufweist, $\Delta T = T2 - T1$ , das heißt die Temperaturdifferenz der von den Temperatursensoren 36 und 35 ermittelten Temperaturen T2 und T1 und t die Zeit, während der ein Ausgleich der Energiebilanz erfolgen soll, ist. Es handelt sich demgemäß um einen vorbestimmten Zeitraum, der beispielsweise ein Jahr betragen kann,.

Die Anordnung ist nun derart getroffen, dass ein Energiebilanzausgleich zu einem bestimmten Zeitpunkt, beispielsweise am 1. August jedes Jahres abgefragt wird. Die bis dahin in dem vorbestimmten Zeitraum aufsummierten Wärmemengen $Q_{Winter}$ und $Q_{Sommer}$ sind mittels entsprechender Einrichtungen erfasst worden. Hierbei handelt es sich bei der Wärmemenge $Q_{Winter}$ um mittels des Erdkollektors 1 dem Erdreich entnommene Wärmeenergie und bezüglich der Wärmemenge $Q_{Sommer}$ um mittels des Erdkollektors 1 in das Erdreich eingebrachte Wärmeenergie. Liegt eine nicht ausgeglichene Energiebilanz vor, sodass $Q_{Winter}$ ungleich $Q_{Sommer}$ ist, wobei insbesondere davon ausgegangen werden kann, dass durch den Winterbetrieb mittels des Erdkollektors 1 dem Erdboden mehr Wärmeenergie entnommen wurde als bisher vom Erdkollektor 1 in den Erdboden eingebracht wurde, so nimmt die Einrichtung selbsttätig innerhalb eines vorbestimmten Zeitbereichs, beispielsweise innerhalb des Monats August, folgende Funktion vor. Sie setzt automatisch den Sollwert der Temperatur T1 um einen vorzugsweise festen Wert herab, beispielsweise um 4 Kelvin oder 4°C. Mit der Folge, dass unabhängig von den wählbaren Einstellungen des Betreibers der Raumlüftung ein Kühleffekt des zu belüftenden Raumes herbeigeführt, indem der Strömungskreislauf 2 in Betrieb genommen wird, mit der Folge, dass eine entsprechende Wärmemenge $Q_{Sommer}$ in das Erdreich eingetragen wird, um einen Energiebilanzausgleich ($Q_{Winter}$ = $Q_{Sommer}$) herbeizuführen oder zumindest soweit wie möglich anzustreben. Wird zu einem späteren Zeitpunkt der Winterbetrieb begonnen, so wird der Energiebilanzausgleich automatisch auf 0 gesetzt, das heißt, es beginnt ein neuer Zyklus.

**Patentansprüche**

1. Verfahren zur Betriebsführung einer temperierten Raumlüftung, insbesondere Wohnungs-, Büro- oder Gebäudelüftung, bei dem in einem geschlossenen Strömungskreislauf ein Trägermedium gefördert und mittels Erdwärme temperiert wird, geförderte Außenluft mit dem Trägermedium in Wärmeaustausch gelangt und als Zuluft in mindestens einen Raum eingebracht wird, **dadurch gekennzeichnet, dass** innerhalb mindestens eines vorbestimmten Zeitraums -unabhängig oder abweichend von wählbaren Einstellungen eines Betreibers der Raumlüftung- die durch das Trägermedium in das Erdreich eingebrachte Wärmeenergie ebenso groß oder etwa ebenso groß ist wie die dem Erdreich durch das Trägermedium entnommene Erdwärmeenergie.

2. Verfahren zur Betriebsführung einer temperierten Raumlüftung, insbesondere Wohnung-, Büro- oder Gebäudelüftung, bei dem in einem geschlossenen Strömungskreislauf ein Trägermedium gefördert und mittels Erdwärme temperiert wird, geförderte Außenluft mit dem Trägermedium in Wärmeaustausch gelangt und als Zuluft in mindestens einen Raum eingebracht wird, **dadurch gekennzeichnet, dass** bei nicht ausgeglichener Energiebilanz, insbesondere durch eine größere durch das Trägermedium dem Erdreich entnommene als in das Erdreich durch das Trägermedium eingebrachte Wärmeenergie, innerhalb mindestens eines vorbestimmten Zeitbereichs eine vorgegebene und/oder vom Betreiber der Raumlüftung wählbare Einstellung automatisch derart verändert wird, dass eine der Veränderung entsprechende Wärmeenergie in das Erdreich durch das Trägermedium eingebracht oder zusätzlich eingebracht wird beziehungsweise eine der Veränderung entsprechende Wärmeenergie dem Erdreich durch das Trägermedium entnommen oder zusätzlich entnommen wird.

3. Verfahren nach Anspruch 1, **dadurch gekennzeichnet, dass** der vorbestimmte Zeitraum ein Jahr beträgt.

**4.** Verfahren nach Anspruch 2, **dadurch gekennzeichnet, dass** der Zeitbereich im Sommer, insbesondere im August, liegt.

**5.** Verfahren nach einem der vorhergehenden Ansprüche, **dadurch gekennzeichnet, dass** im Winterhalbjahr dem Erdreich Erdwärmeenergie entnommen wird.

**6.** Verfahren nach einem der vorhergehenden Ansprüche, **dadurch gekennzeichnet, dass** im Sommerhalbjahr dem Erdreich Wärmeenergie zugeführt wird.

**7.** Verfahren nach einem der vorhergehenden Ansprüche, **dadurch gekennzeichnet, dass** die in das Erdreich eingebrachte Wärmeenergie von der Außenluft stammt.

**8.** Verfahren nach einem der vorhergehenden Ansprüche, **dadurch gekennzeichnet, dass** als Trägermedium ein Flüssigkeit verwendet wird.

**9.** Verfahren nach einem der vorhergehenden Ansprüche, **dadurch gekennzeichnet, dass** als Trägermedium eine Sole verwendet wird.

**10.** Verfahren nach einem der vorhergehenden Ansprüche, **dadurch gekennzeichnet, dass** die Förderung von Außenluft ein- und ausgeschaltet wird.

**11.** Verfahren nach einem der vorhergehenden Ansprüche, **dadurch gekennzeichnet, dass** die Förderung des Trägermediums ein- und ausgeschaltet wird.

**12.** Verfahren nach einem der vorhergehenden Ansprüche, **dadurch gekennzeichnet, dass** die nach dem Wärmetausch vorliegende Temperatur der Außenluft ermittelt und beim Unterschreiten einer vorgegebenen ersten Minimaltemperatur die Förderung des Trägermediums eingeschaltet wird.

**13.** Verfahren nach einem der vorhergehenden Ansprüche, **dadurch gekennzeichnet, dass** die nach dem Wärmetausch vorliegende Temperatur der Außenluft ermittelt und beim Überschreiten einer vorgegebenen ersten Maximaltemperatur die Förderung des Trägermediums ausgeschaltet wird.

**14.** Verfahren nach einem der vorhergehenden Ansprüche, **dadurch gekennzeichnet, dass** die erste Minimaltemperatur + 5°C bis - 5°C, vorzugsweise 0°C beträgt.

**15.** Verfahren nach einem der vorhergehenden Ansprüche, **dadurch gekennzeichnet, dass** die erste Maximaltemperatur 0,01 bis 8°C größer, vorzugsweise 2°C größer, als die erste Minimaltemperatur ist oder dass die erste Maximaltemperatur 2°C beträgt.

**16.** Verfahren nach einem der vorhergehenden Ansprüche, insbesondere nach einem der vorhergehenden Ansprüche 12 bis 15, **dadurch gekennzeichnet, dass** ein Winterbetrieb vorliegt.

**17.** Verfahren nach einem der vorhergehenden Ansprüche, **dadurch gekennzeichnet, dass** die vor dem Wärmetausch vorliegende Temperatur der Außenluft ermittelt und beim Überschreiten einer vorgegebenen zweiten Maximaltemperatur die Förderung des Trägermediums eingeschaltet wird.

**18.** Verfahren nach einem der vorhergehenden Ansprüche, **dadurch gekennzeichnet, dass** die vor dem Wärmetausch vorliegende Temperatur der Außenluft ermittelt und beim Unterschreiten einer vorgegebenen zweiten Minimaltemperatur die Förderung des Trägermediums ausgeschaltet wird.

**19.** Verfahren nach einem der vorhergehenden Ansprüche, **dadurch gekennzeichnet, dass** die zweite Maximaltemperatur größer 15°C, insbesondere 22°C beträgt.

**20.** Verfahren nach einem der vorhergehenden Ansprüche, **dadurch gekennzeichnet, dass** die zweite Minimaltemperatur 0,01 bis 8°C, vorzugsweise 0,5 °C kleiner als die zweite Maximaltemperatur ist.

**21.** Verfahren nach einem der vorhergehenden Ansprüche, insbesondere nach einem der vorhergehenden Ansprüche 17 bis 20, **dadurch gekennzeichnet, dass** ein Sommerbetrieb vorliegt.

**22.** Vorrichtung zur Betriebsführung einer temperierten Raumbelüftung, insbesondere Wohnungs-, Büro- oder Gebäudebelüftung, mit einem geschlossenen Strömungskreislauf (2) eines Trägermediums (28), das mit einem Erdkollektor (1) und einem Trägermedium-Außenluft-Wärmetauscher (12) zusammenwirkt, wobei geförderte Außenluft (33) in dem Trägermedium-Außenluft-Wärmetauscher (12) temperiert und als Zuluft (34) in mindestens einen Raum eingebracht wird, **gekennzeichnet durch** eine Steuer- und/oder Regeleinrichtung (29), die derart arbeitet, dass innerhalb mindestens eines vorbestimmten Zeitraums -unabhängig oder abweichend von wählbaren Einstellungen eines Betreibers der Raumlüftung- die **durch** das Trägermedium (28) in das Erdreich eingebrachte Wärmeenergie ebenso groß oder etwa ebenso groß ist wie die dem Erdreich **durch** das Trägermedium (28) entnommene Erdwärmeenergie.

**23.** Vorrichtung zur Betriebsführung einer temperierten Raumbelüftung, insbesondere Wohnungs-, Büro- oder Gebäudebelüftung, mit einem geschlossenen Strömungskreislauf (2) eines Trägermediums (28), das mit einem Erdkollektor (1) und einem Trägermedium-Außenluft-Wärmetauscher (12) zusammenwirkt, wobei geförderte Außenluft (33) in dem Trägermedium-Außenluft-Wärmetauscher (12) temperiert und als Zuluft (34) in mindestens einen Raum eingebracht wird, **gekennzeichnet durch** eine Steuer- und/oder Regeleinrichtung (29), die derart arbeitet, dass bei nicht ausgeglichener Energiebilanz, insbesondere **durch** eine größere **durch** das Trägermedium (28) dem Erdreich entnommene als in das Erdreich **durch** das Trägermedium (28) eingebrachte Wärmeenergie, innerhalb mindestens eines vorbestimmten Zeitbereichs eine vorgegebene und/oder vom Betreiber der Raumlüftung wählbare Einstellung automatisch derart verändert wird, dass eine der Veränderung entsprechende Wärmeenergie in das Erdreich **durch** das Trägermedium (28) eingebracht oder zusätzlich eingebracht wird beziehungsweise eine der Veränderung entsprechende Wärmeenergie dem Erdreich **durch** das Trägermedium (28) entnommen oder zusätzlich entnommen wird.

Fig.